(19) Europäisches Patentamt
European Patent Office
Office européen des brevets

(11) **EP 4 438 525 B1**

(12) # EUROPEAN PATENT SPECIFICATION

(45) Date of publication and mention of the grant of the patent:
**09.09.2026 Bulletin 2026/37**

(21) Application number: **22895711.4**

(22) Date of filing: **18.11.2022**

(51) International Patent Classification (IPC):
***B65D 85/00*** *(2006.01)* ***B65D 1/36*** *(2006.01)*
***B65D 85/58*** *(2006.01)* ***C04B 35/00*** *(2006.01)*
***F16C 33/32*** *(2006.01)* ***F16C 33/34*** *(2006.01)*
***B65D 71/70*** *(2006.01)* ***F16C 41/04*** *(2006.01)*
***F16C 43/04*** *(2006.01)* ***C04B 35/10*** *(2006.01)*
***C04B 35/584*** *(2006.01)*

(52) Cooperative Patent Classification (CPC):
**B65D 71/70; B65D 85/58; F16C 41/04;** C04B 35/10; C04B 35/584; C04B 2235/94; C04B 2235/96; F16C 43/04

(86) International application number:
**PCT/JP2022/042901**

(87) International publication number:
**WO 2023/090430 (25.05.2023 Gazette 2023/21)**

(54) **CERAMIC BALL STORAGE TRAY AND CERAMIC BALL STORAGE METHOD USING SAME**

LAGERUNGSSCHALE FÜR KERAMIKKUGELN UND LAGERUNGSVERFAHREN FÜR KERAMIKKUGELN DAMIT

PLATEAU DE STOCKAGE DE BILLES EN CÉRAMIQUE ET PROCÉDÉ DE STOCKAGE DE BILLES EN CÉRAMIQUE L'UTILISANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.11.2021 JP 2021189250**

(43) Date of publication of application:
**02.10.2024 Bulletin 2024/40**

(73) Proprietor: **Niterra Materials Co., Ltd.**
**Yokohama-shi, Kanagawa 235-8522 (JP)**

(72) Inventors:
- **YAMADA, Katsuhiko**
**Yokohama-shi, Kanagawa 235-0032 (JP)**
- **SAKAI, Ryo**
**Yokohama-shi, Kanagawa 235-0032 (JP)**
- **SANO, Shoya**
**Yokohama-shi, Kanagawa 235-0032 (JP)**
- **YAMAGUTI, Haruhiko**
**Yokohama-shi, Kanagawa 235-0032 (JP)**
- **YAMADA, Akihiro**
**Yokohama-shi, Kanagawa 235-0032 (JP)**
- **SATO, Akira**
**Yokohama-shi, Kanagawa 235-0032 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
**WO-A1-2017/157375**
**CN-U- 201 884 486**
**DE-U- 7 033 763**
**JP-A- 2001 114 283**
**JP-A- 2006 062 702**
**JP-A- 2007 161 309**
**US-A1- 2007 138 177**
**US-A1- 2007 138 177**
**US-A1- 2011 233 092**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

Embodiments described later relate to a ceramic ball storage tray and a method of storing ceramic balls using the same.

### BACKGROUND ART

Ceramic balls are used in fields such as bearings. Various materials are used for ceramics, such as silicon nitride, aluminum oxide, and zirconium oxide. For example, JP 5 487 099 A discloses a bearing ball made of a silicon nitride sintered body. The ceramic ball of JP 5 487 099 A has excellent wear resistance even if it is large with a diameter of about 20 mm.

Bearings each have a structure in which a plurality of bearing balls are installed between an outer ring and an inner ring. In other words, a plurality of bearing balls are required to manufacture one bearing. As a result, it has been necessary to transport a plurality of ceramic balls.

For example, JP 2004-018 050 Adiscloses a container made of paper for storing bearing balls. JP 2004-018 050 Adiscloses a container using thick paper in which at least two or more sheets of cardboard liner are laminated. The container made of paper of JP 2004-018 050 Ashows that even if a plurality of bearing balls are stored, the container will not be damaged.US 2007/138177 A1 discloses a storage tray for fruit, comprising storage recesses with a downwardly protruding portion at the bottom, making the center of the recess bottom hollow. This structure is intended to provide support for the fruit and prevent damage during transport.

CN 201 884 486 U discloses a bearing protection pad comprising a body with several recesses designed to match the outer diameter of a bearing. Each recess features a through-hole in its center, intended to allow anti-rust oil to drain away.

DE 70 33 763 U relates to a tray with a cellular structure, made of foam plastic, for packaging and transporting fruits. The tray is designed to be sufficiently rigid for upright placement within a larger container, thereby allowing for multiple layers of fruit.

WO 2017/157375 A1 discloses a holding device for spherical bodies, such as rolling elements, intended for visual surface inspection. The device comprises a frame with receiving devices, such as conical spiral springs or flexible holding arms, that grip the spherical body. This holding mechanism is fundamentally different from the integral storage portions of the tray of the present invention.

### SUMMARY OF THE INVENTION

### PROBLEMS TO BE SOLVED BY THE INVENTION

When a plurality of bearing balls are transported in the container of the prior art, the plurality of bearing balls are stored together in the container. When a plurality of bearing balls are stored in one container, problems arise in that the balls come into contact with each other in transportation, causing cracks and chips in the balls. In addition, bearing balls made of ceramics are polished to be spherical. Before polishing, each ceramic ball has a band-shaped portion. For example, JP 4 761 613 A discloses a ceramic ball having a band-shaped portion. Placing a plurality of ceramic balls each having a band-shaped portion in one container causes many cracks and chips in the balls. This is because the band-shaped portions are easily damaged if they collide with each other.

A problem to be solved by a ceramic ball storage tray and a method of storing ceramic balls using the same according to embodiments is to reduce damage of ceramic balls stored in the ceramic ball storage tray in order to address such problems.

### MEANS FOR SOLVING THE PROBLEMS

A ceramic ball storage tray according to the invention is defined in claim 1. Claim 8 is directed to a corresponding method. The dependent claims are related to further advabtageous aspects of the invention

### BRIEF DESCRIPTION OF THE DRAWINGS

FIG. 1 is a top view showing an example of a ceramic ball storage tray according to an embodiment.

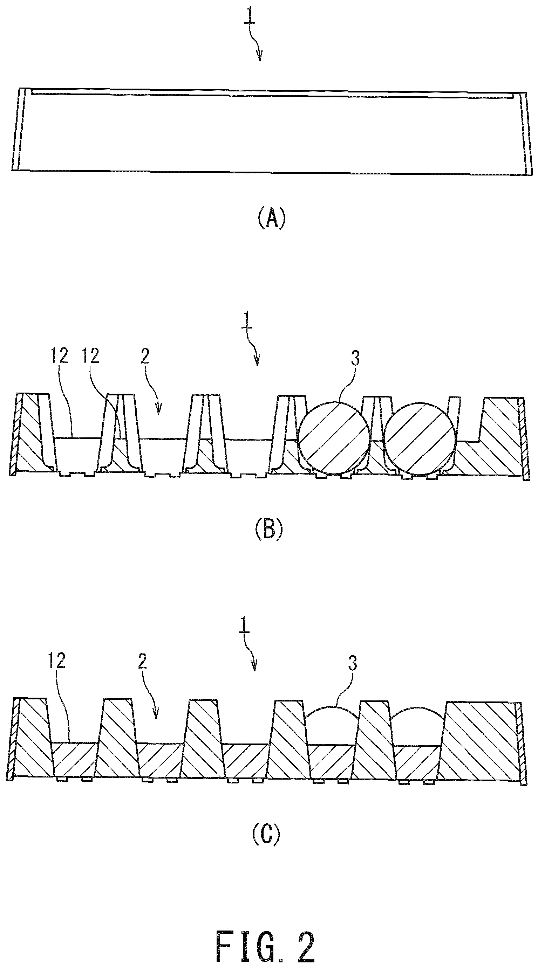

FIG. 2(A) is a side view showing the example of the ceramic ball storage tray according to the embodiment, FIG. 2(B) is

a B-B cross-sectional view showing the example of the ceramic ball storage tray according to the embodiment, and FIG. 2(C) is a C-C cross-sectional view showing the example of the ceramic ball storage tray according to the embodiment.

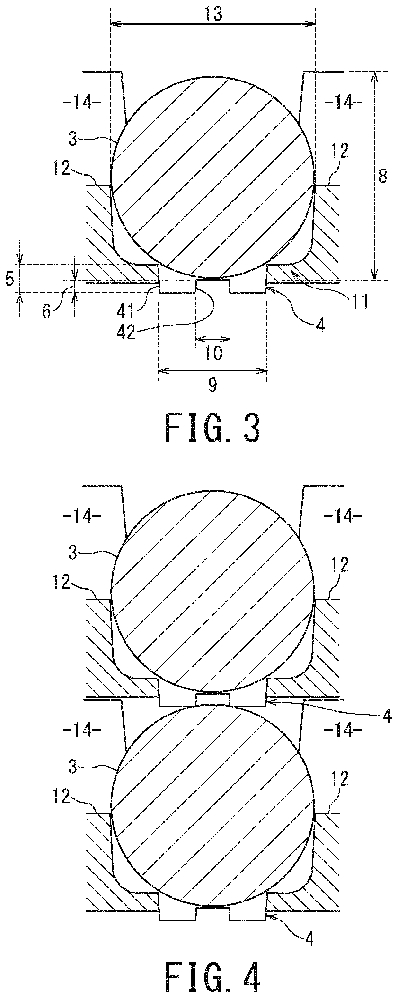

FIG. 3 is an enlarged view showing the B-B cross section of a storage portion of the ceramic ball storage tray according to the embodiment.

FIG. 4 is an enlarged view showing the B-B cross section of the storage portion in a state in which the ceramic ball storage trays according to the embodiment are stacked in an up-down direction.

## DESCRIPTION OF EMBODIMENTS

Hereinafter, embodiments of a ceramic ball storage tray and a method of storing ceramic balls using the same will be described in detail with reference to the drawings.

The ceramic ball storage trays according to the embodiments each have storage portions that store ceramic balls. The storage portions of the ceramic ball storage tray each have a protruding portion formed such that a center of the bottom surface portion of the storage portion is hollow. In addition, a height of the outer circumferential surface of the protruding portion relative to the diameter of the ceramic ball is within a range of 0.05 or more and 0.30 or less.

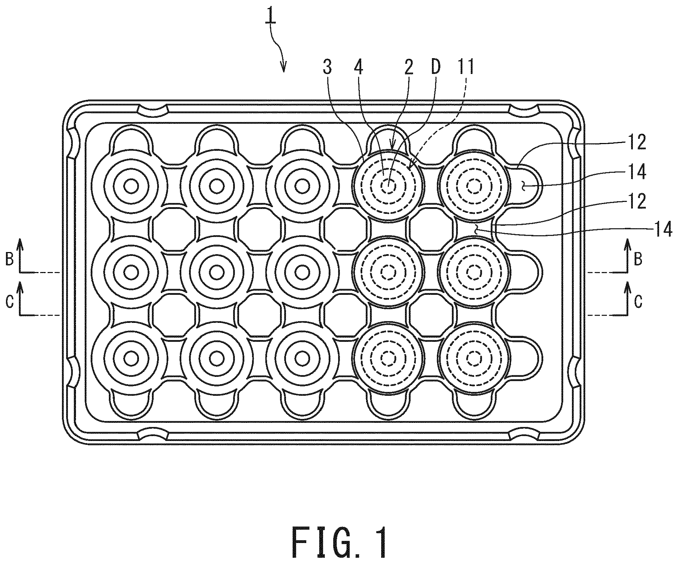

In the figures, a reference numeral 1 denotes a ceramic ball storage tray, a reference numeral 2 denotes a storage portion, a reference numeral 3 denotes a ceramic ball, a reference numeral 4 denotes a protruding portion, a reference numeral 5 denotes a height of an outer circumferential surface of the protruding portion 4, a reference numeral 6 denotes a height of an inner circumferential surface of the protruding portion 4, a reference numeral 7 denotes a diameter of the ceramic ball 3, a reference numeral 8 denotes a height of the storage portion 2, a reference numeral 9 denotes a diameter of an outer circumferential surface of the protruding portion 4, a reference numeral 10 denotes a diameter of an inner circumferential surface of the protruding portion 4, a reference numeral 11 denotes a bottom surface portion, a reference numeral 12 denotes a circumferential portion of the storage portion 2, a reference numeral 13 denotes a diameter of the storage portion 2, and a reference numeral 14 denotes a recess in the circumferential portion 12. FIG. 1 illustrates the ceramic ball storage tray 1 comprising 15 storage portions 2. The tray 1 is not limited to this, and the number of storage portions 2 can be increased or decreased. Furthermore, FIG. 1 illustrates the ceramic ball storage tray 1 having three storage portions arranged in the longitudinal direction and five storage portions arranged in the transverse direction, but the numbers can also be increased or decreased as appropriate. The ceramic ball storage tray 1 may also be referred to as a storage tray 1 or a tray 1. In addition, the ceramic ball 3 may be simply referred to as a ball 3. Note that FIG. 1 shows a state in which two rows of the storage portions 2 on the right side store the ceramic balls 3 therein.

The storage tray 1 has storage portions 2. The storage portions 2 can each store a ceramic ball 3. Each storage portion 2 has a protruding portion 4 formed such that the center of the bottom surface portion 11 is hollow. The bottom surface portion 11 of the storage portion 2 is designed to prevent the ceramic ball 3 from falling out. An opposite side (that is, a ceiling side) of the bottom surface portion 11 is an opening portion so that the ceramic ball 3 can be easily stored.

Each protruding portion 4 of the bottom surface portion 11 of the storage portion 2 has a shape that protrudes downward from the bottom surface portion 11. Presence of the protruding portions 4 makes it possible to absorb the impact when the tray 1 is transported (that is, when the ceramic balls 3 are transported). Furthermore, as will be described later, presence of protruding portions 4 in the storage portions 2 can prevent direct contact between the ceramic balls 3 that are adjacent to each other in the up-down direction when the storage trays 1 are stacked in the up-down direction. In addition, it is preferable that each protruding portion 4 should have a hollow cylindrical shape formed such that the center of the bottom surface portion 11 is hollow. Since the protruding portion 4 is a hollow cylinder, the strength of the protruding portion 4 can be improved. Hereinafter, a case will be described in which the protruding portion 4 is a hollow cylinder having a circular shape when viewed from above, but the protruding portion 4 is not limited to this case. For example, there may be a case in which the protruding portion 4 may have a polygonal shape when viewed from above.

Also, the diameter 7 of each ceramic ball 3 is called a ball diameter 7. The ceramic ball 3 may be a ceramic ball with a band-shaped portion. Manufacturing a ceramic ball using metal molding creates a ceramic ball with a band-shaped portion. Polishing the ceramic ball with the band-shaped portion creates a true spherical ceramic ball. The storage tray 1 may store any of true spherical ceramic balls or ceramic balls with a band-shaped portion. In other words, shapes of the ceramic balls 3 include both a true spherical shape and a shape with a band-shaped portion. A ceramic ball before polishing is sometimes called a bare ball.

In addition, the ball diameter 7 is the maximum diameter of the ceramic ball 3. If the ceramic ball 3 is truly spherical, the maximum diameter is a freely-selected diameter. If the ceramic ball 3 has a band-shaped portion, the diagonal line of the band-shaped portion has the maximum diameter.

(Height of an outer circumferential surface and height of an inner circumferential surface of the protruding portion)

Since each protruding portion 4 has a hollow protruding shape, the protruding portion 4 has an outer circumfer-

ential surface 41 and an inner circumferential surface 42 that stand in the height direction. The height of the outer circumferential surface 41 is denoted by 5, and the height of the inner circumferential surface 42 is denoted by 6. The height 5 of the outer circumferential surface 41 of the protruding portion 4 is sometimes referred to as an outer circumferential height 5. The height 6 of the inner circumferential surface 42 of the protruding portion 4 is sometimes referred to as an inner circumferential height 6. In order to hold the stored ceramic balls 3 on the ceiling side of the inner circumferential surface 42, the height 6 of the inner circumferential surface 42 is desirably lower than the height 5 of the outer circumferential surface 41.

According to the invention the ratio "outer circumferential height 5 of the protruding portion/ball diameter 7", which is the height 6 of the outer circumferential surface 41 of the protruding portion 4 relative to the ball diameter 7, is within a range of 0.05 or more and 0.30 or less. The "outer circumferential height 5/ball diameter 7" within the range of 0.05 or more and 0.30 or less can prevent direct contact between the ceramic balls 3 adjacent in the up-down direction when a plurality of storage trays 1 are stacked in the up-down direction. Furthermore, damage to the ceramic balls 3 due to vibrations in transportation of the tray 1 can be prevented.

If the "outer circumferential height 5/ball diameter 7" is less than 0.05, an effect of providing the protruding portion 4 cannot be obtained. In addition, if the "outer circumferential height 5/ball diameter 7" exceeds 0.30, the protruding portion 4 is too high. If each protruding portion 4 is high, the stability when the trays 1 are stacked in the up-down direction may decrease. Therefore, the "outer circumferential height 5/ball diameter 7" is within the range of 0.05 or more and 0.30 or less, more preferably 0.10 or more and 0.25 or less.

In addition, it is preferable that "inner circumferential height 6 of the protruding portion/ball diameter 7", which is the height 6 of the inner circumferential surface 42 of the protruding portion 4 relative to the diameter 7 of the ceramic ball 3, should be within a range of 0.01 or more and 0.10 or less. It is desirable that the height 6 of the inner circumferential surface 42 is lower than the height 5 of the outer circumferential surface 41. The inner circumferential height 6 of the protruding portion 4 is the height of the inner circumferential side of the hollow protruding portion 4. The "inner circumferential height 6 of the protruding portion/ball diameter 7" within the range of 0.01 or more and 0.10 or less allows the inner circumferential side of the protruding portion 4 to press down the ceramic balls 3 stored in the lower tray 1 when a plurality of trays 1 are stacked in the up-down direction. Even if a plurality of trays 1 are stacked and transported, movement of the stored ceramic balls 3 can be prevented. This can prevent damage to the ceramic balls 3 in transportation of the tray 1.

If the "inner circumferential height 6 of protruding portion/ball diameter 7" is less than 0.01, the inner circumferential height 6 of the protruding portion 4 is small. This causes the bottom surface portion 11 of the storage portion 2 of the upper tray 1 to be highly likely to come into direct contact with the ceramic ball 3 of the lower tray 1 when a plurality of trays 1 are stacked in the up-down direction. As the area increases in which each bottom surface of the tray 1 is in direct contact with the ceramic ball 3, a stress applied to the ceramic balls 3 increases, increasing damage possibility. In addition, if the "inner circumferential height 6/ball diameter 7" exceeds 0.10, the height of the protruding portion 4 may be too high.

(The height of the storage portion 2)

Furthermore, according to the invention the ratio "height of the storage portion 8/ball diameter 7", which is the height of the storage portion 2 relative to the diameter 7 of the ceramic ball 3, is within a range of 1.05 or more and 2.00 or less.

The height 8 of the storage portion 2 is a length from the bottom surface portion 11 of the storage portion 2 to the opening portion on the opposite side.

First, draw a vertical line in the up-down direction from the center of the bottom surface portion 11 of the storage portion 2. Next, draw a horizontal line (perpendicular to the vertical line) so as to connect the opening portion of the storage portion 2 from end to end. The length from the center of the bottom surface portion 11 of the storage portion 2 to the intersection of the vertical line and the horizontal line is defined as the height 8 of the storage portion 2.

The "height 8 of storage portion/ball diameter 7" within the range of 1.05 or more and 2.00 or less can prevent the ceramic balls 3 from moving too much when the tray 1 is transported. Therefore, the ceramic balls 3 can be prevented from being damaged in transportation of the tray 1. Furthermore, even the ceramic ball 3 with a band-shaped portion can be prevented from damage.

The "height 8 of storage portion/ball diameter 7" less than 1.05 may cause each protruding portion 4 of the upper tray 1 to apply more stress than necessary to the ceramic ball 3 stored in the lower tray 1 when a plurality of trays 1 are stacked in the up-down direction. Contrarily, the "height of storage portion 8/ball diameter 7" exceeding 2.00 may decrease the effect of preventing excessive movement of the ceramic ball 3 in transportation even when a plurality of trays 1 are stacked in the up-down direction. Therefore, according to invention the ratio of the "height of storage portion 8/ball diameter 7" is within the range of 1.05 or more and 2.00 or less, more preferably 1.08 or more and 1.60 or less.

(The diameter of the storage portion 2)

It is preferable that "diameter 13 of storage portion/diameter 7 of ball", which is the diameter 13 of the storage portion 2 relative to the diameter 7 of the ceramic ball 3, should be within the range of 1.05 or more and 1.70 or less. The "diameter 13 of storage portion/diameter 7 of ball" less than 1.05 may cause the ball 3 to have difficulty in entering in storage. Contrarily, the "diameter of storage portion/diameter of ball" exceeding 1.70 may cause the ball 3 to move too much in transportation of the tray 1.

FIG. 4 shows an example of stacking the storage trays 1. The structure is such that, when a plurality of storage trays 1 are stacked in the up-down direction, each protruding portion 4 of the upper tray 1 presses down the ball stored in the lower tray 1. This can prevent movement of the balls 3 in transportation of the trays 1.

It is also preferable that the outer circumferential height 5 of the protruding portion 4 be larger than the inner circumferential height 6 of the protruding portion 4. The fact that the outer circumferential height 5 of the protruding portion 4 is larger than the inner circumferential height 6 of the protruding portion 4 indicates that there is a step in the bottom surface portion 11 of the storage portion 2. Thereby, one ceramic ball 3 can be supported at a plurality of locations. As a result, movement of the ceramic ball 3 in transportation of the tray 1 can be prevented. Moreover, it is preferable that the outer circumferential height 5 of the protruding portion 4 be 3 mm or more. Setting the outer circumferential height 5 of the protruding portion 4 to 3 mm or more makes it easy to form the step on the bottom surface portion 11 of the storage portion 2. Furthermore, when a plurality of trays 1 are stacked in the up-down direction, the protruding portions 4 play a role in preventing misalignment. In addition, the inner circumferential surface of the storage portion 2 can take various shapes such as a spherical shape and a stepped shape. For example, the inner circumferential surface of the storage portion 2 may be made into a spherical shape, and the protruding portion 4 may be made into a cavity. The portion made into a cavity forms a step. Furthermore, the protruding portions 4 each made into a cavity makes it possible to improve the cushioning properties for the ceramic balls 3 when a plurality of trays 1 are stacked in the up-down direction. Moreover, weight of the tray 1 can also be reduced.

(The diameter of the outer circumferential surface 41 and the diameter of the inner circumferential surface 42)

It is preferable that "outer circumferential diameter 9 of the protruding portion/ball diameter 7", which is the diameter 9 of the outer circumferential surface 41 of the protruding portion 4 relative to the diameter 7 of the ceramic ball 3, should be within a range of 0.3 or more and 0.8 or less. In addition, it is preferable that "inner circumferential diameter of the protruding portion 10/ball diameter 7", which is the diameter 10 of the inner circumferential surface 42 of the protruding portion 4 relative to the diameter 7 of the ceramic ball 3, should be within a range of 0.1 or more and 0.6 or less. It goes without saying that the inner circumferential diameter 10 is smaller than the outer circumferential diameter 9. The outer circumferential diameter 9 of the protruding portion 4 is the outer diameter at the head end portion (that is, the lower end portion) of the protruding portion 4. In addition, the inner circumferential diameter 10 of the protruding portion 4 is the inner diameter at the head end portion (that is, the lower end portion) of the protruding portion.

The "outer circumferential diameter 9 of the protruding portion/diameter 7 of the ball" within the range of 0.3 or more and 0.8 or less can provide an effect of causing the protruding portion 4 to press down the ceramic ball 3 stored in the lower tray 1 when a plurality of trays 1 are stacked in the up-down direction. Likewise, the "inner circumferential diameter 10/ball diameter 7" within the range of 0.1 or more and 0.6 or less can provide an effect of causing the protruding portion 4 to press down the ceramic ball 3 stored in the lower tray 1 when a plurality of trays 1 are stacked in the up-down direction.

If the "outer circumferential diameter 9 of the protruding portion/ball diameter 7" is less than 0.3, the outer diameter 9 of the protruding portion 4 may be too small. If the outer circumferential diameter 9 of the protruding portion 4 is small, a difference between the outer circumferential diameter 9 and the inner circumferential diameter 10 may be small. If the difference between the outer circumferential diameter 9 and the inner circumferential diameter 10 is small, the area of the protruding portion 4 in contact with the ceramic ball 3 stored in the lower tray 1 is small when a plurality of trays 1 are stacked in the up-down direction. Vibration in transportation of the tray 1 causes the protruding portion 4 to be in sharp contact with the ceramic ball 3, which may cause damage.

Contrarily, if the "outer circumferential diameter 9 of the protruding portion/ball diameter 7" exceeds 0.8, the outer diameter of the protruding portion 4 may be too large. Even if the outer diameter of the protruding portion 4 is increased, no further effect can be obtained. Furthermore, if the ratio of "outer circumferential diameter 9 of the protruding portion/ball diameter 7" is 0.8 or less, there is an effect of reducing the weight of the storage tray 1.

On the other hand, the "inner circumferential diameter of the protruding portion 10/ball diameter 7" within the range of 0.1 or more and 0.6 or less can further provide an effect of pressing down the ceramic ball 3 stored in the lower tray 1 when a plurality of trays 1 are stacked in the up-down direction.

In contrast, if the "inner circumferential diameter 10 of the protruding portion/ball diameter 7" is less than 0.1, the inner circumferential diameter 10 may be too small. Contrarily, if the "inner circumferential diameter of the protruding portion 10/ball diameter 7" exceeds 0.6, a width of the protruding portion 4 may be too narrow. The too narrow width of the

protruding portion 4 causes the protruding portion 4 to be in sharp contact with the ceramic ball 3 stored in the lower tray 1 when a plurality of trays 1 are stacked in the up-down direction, which may cause damage.

For this reason, it is preferable to satisfy both of the following: the "outer circumferential diameter of the protrusion 9/ball diameter 7" is 0.3 or more and 0.8 or less; and the "inner circumferential diameter 10 of the protruding portion/ball diameter 7" is 0.1 or more and 0.6 or less.

(The circumferential portion 12)

There are the circumferential portions 12 around the storage portions 2. Each circumferential portion 12 connects adjacent storage portions 2. The circumferential portion 12 may be a casing that covers side surfaces of the storage portion 2. In addition, the circumferential portions 12 may be provided further outside of the storage portions 2 at the end (for example, the upper end, lower end, and right end in FIG. 1) out of the plurality of storage portions 2. It is preferable to provide a recess 14 in each circumferential portion 12 around the storage portion 2 from the opening portion side of the tray 1 toward the bottom surface portion 11 side thereof. This can make it easier to insert fingers or a robot arm holding the ball 3 through the recess 14 from the opening portion of the tray 1 toward the storage portion 2 thereof, allowing the ball 3 to be set in the storage portion 2 more easily. Furthermore, this can make it easier to grip the ball 3 stored in the storage portion 2 with fingers or a robot arm through the recess 14, allowing the ball 3 stored in the storage portion 2 to be taken out from the tray 1 more easily.

(Materials for the storage tray 1)

Preferably, the storage tray 1 is made of plastic. Plastic is also called synthetic resin. Plastic is a plastic substance, the main raw material of which is a polymer material derived from petroleum or the like. Plastic can be formed by applying heat and pressure. Since plastic can be formed, it is suitable for forming the storage portions 2 as aforementioned. The materials for the tray 1 include plastic, rubber, paper, glass, and ceramics. Of these, plastic is suitable from the viewpoint of strength and weight reduction. The plastics include polyethylene terephthalate (PET), polypropylene (PP), and polyethylene (PE). Of these, polyethylene terephthalate is preferred. This is because polyethylene terephthalate has good recyclability.

(The ceramic ball 3)

According to the invention the ceramic ball 3 having a diameter of 10 mm or more and 100 mm or less.

In addition, the ceramic balls 3 include one or two or more sintered bodies selected from silicon nitride sintered bodies, sialon sintered bodies, aluminum oxide sintered bodies, zirconium oxide sintered bodies, and argil sintered bodies. Argil sintered bodies are each a sintered body of a mixture of aluminum oxide and zirconium oxide. For example, the silicon nitride sintered bodies include a sintered body containing 85% by mass or more of silicon nitride.

It is preferable that the ceramic balls 3 be silicon nitride sintered bodies. Silicon nitride sintered bodies are more expensive than aluminum oxide sintered bodies or the like. If the ceramic balls 3 are damaged in transportation of the tray 1, there will be a large economic loss. For this reason, the storage trays 1 of the embodiments are preferably applied to ceramic balls 3 made of silicon nitride sintered bodies.

Additionally, silicon nitride sintered bodies, sialon sintered bodies, zirconium oxide sintered bodies, and argil sintered bodies include ones each having a three-point bending strength of 800 MPa or more. In contrast, the aluminum oxide sintered bodies each have a three-point bending strength of about 300 to 500 MPa. Even if the ceramic balls 3 stored in the storage trays 1 of the embodiments are aluminum oxide ceramic balls with low strength, damage can be prevented.

(A method of storing the ceramic balls 3)

A method of storing the ceramic balls 3 uses the storage tray 1 as described above, and stores the ceramic balls 3 in a storage process. Specifically, the storage process includes: a step of inserting fingers or a robot arm holding the ceramic ball 3 from the opening portion of the storage tray 1 toward the storage portion 2, and setting the ball 3 in the storage portion 2 for storage; and a step of stacking a plurality of storage trays 1, in which ceramic balls 3 are stored, in the up-down direction. The method of storing the ceramic balls 3 includes subsequently transporting a plurality of storage trays 1 stacked in the up-down direction in a step of transportation. The configuration of the storage trays 1 can prevent damage to the ceramic balls 3 due to vibrations in transportation of the storage trays 1.

Note that, when the storage tray 1 is provided with a plurality of storage portions 2, the storage tray 1 may store the ceramic balls 3 in a part of the storage portions 2. For example, polishing a ceramic ball 3 with a band-shaped portion creates a true spherical ceramic ball 3. The true spherical ceramic ball 3 can be used as a bearing ball. Furthermore, a bearing is assembled using a plurality of bearing balls. In completion of bearings, a step of transporting the trays 1 is

involved. It is important to prevent damage to the ceramic balls 3 in transportation of the trays 1.

(Ways of a vibration test and a drop test)

In the storage trays 1 according to the embodiments, a plurality of storage trays 1 storing balls 3 may be stacked in the up-down direction. The storage portions 2 with the above configuration can prevent adjacent ceramic balls 3 in the up-down direction from coming into contact with each other when a plurality of storage trays 1 are stacked in the up-down direction. Furthermore, when a plurality of storage trays 1 are stacked in the up-down direction, the ceramic balls 3 adjacent in the up-down direction may be in contact with each other via the protruding portions 4. If a plurality of storage trays 1 can be stacked, the trays 1 can be transported efficiently. Furthermore, providing the protruding portion 4 as aforementioned makes it possible to have a structure in which the upper and lower trays 1 are fitted together. This can prevent the upper and lower trays 1 from being misaligned when a plurality of trays 1 are stacked and transported.

The storage trays 1 as described above can prevent the ceramic balls 3 from being damaged due to vibration or drop. The performance of the storage trays 1 can be evaluated using the vibration test and drop test specified in JIS-Z-0200 (2013). Note that JIS-Z-0200 corresponds to ISO4180.

Even if JIS-Z-0200 vibration test level 1 and drop test level 1 are performed, damage to the ceramic balls 3 can be prevented. The vibration tests include different levels, and the level 1 has the most severe conditions. Likewise, drop tests includes different levels, and the level 1 has the most severe conditions.

The storage trays 1 according to the embodiments are not damaged even if they are each subjected to the vibration test level 1 and the drop test level 1. Furthermore, even if the trays 1 storing the ceramic balls 3 are subjected to the vibration test level 1, the damage to the ceramic balls 3 can be 0% or more and 1% or less. Likewise, even if the trays 1 storing the ceramic balls 3 are subjected to the drop test level 1, the damage to the ceramic balls 3 can be 0% or more and 1% or less. Therefore, the ceramic balls 3 can be prevented from damage in transportation.

(Examples)

(Examples 1 to 10, and Comparative Examples 1 to 4)

The storage trays 1 according to Examples 1 to 10 and the storage trays according to Comparative Examples 1 to 4 were prepared each of which was made of plastic and had a width of 523 mm and a length of 415 mm. The storage trays 1 according to Examples 1 to 10 were each provided with storage portions 2. In contrast, the storage trays according to Comparative Examples 1 and 4 were not provided with the storage portion 2, and the storage trays according to Comparative Examples 2 and 3 were each provided with storage portions outside the range of the storage portion 2. The shapes of the ceramic balls to be stored and the storage portions were shown in Table 1.

The ceramic balls stored in the storage trays in Examples 1 to 8 and Comparative Examples 1 to 3 were each made of a silicon nitride sintered body. The ceramic balls stored in the storage trays according to Examples 9 to 10 and Comparative Example 4 were each made of an aluminum oxide sintered body. The ceramic balls made of the silicon nitride sintered bodies are used each of which had a three-point bending strength of 950 MPa. The ceramic balls made of the aluminum oxide were used each of which had a three-point bending strength of 400 MPa.

[Table 1]

| | Ceramic Ball | | Storage Portion | |
|---|---|---|---|---|
| | Diameter mm | Presence or Absence of Band-Shaped Portion | Height mm of Storage Portion | Diameter mm of Storage Portion |
| Example 1 | 24 | Presence | 36 | 34 |
| Example 2 | 33 | Absence | 36 | 35 |
| Example 3 | 35 | Presence | 49 | 43 |
| Example 4 | 43 | Absence | 49 | 44 |
| Example 5 | 44 | Presence | 55 | 49 |
| Example 6 | 49 | Absence | 55 | 50 |
| Example 7 | 50 | Presence | 66 | 59 |
| Example 8 | 59 | Absence | 66 | 59 |
| Example 9 | 24 | Presence | 36 | 34 |

(continued)

| | Ceramic Ball | | Storage Portion | |
|---|---|---|---|---|
| | Diameter mm | Presence or Absence of Band-Shaped Portion | Height mm of Storage Portion | Diameter mm of Storage Portion |
| Example 10 | 33 | Absence | 36 | 35 |
| Comparative Example 1 | 24 | Presence | Absence | - |
| Comparative Example 2 | 24 | Presence | 36 | 34 |
| Comparative Example 3 | 24 | Presence | 36 | 34 |
| Comparative Example 4 | 24 | Presence | Absence | - |

| | Storage Portion | | | |
|---|---|---|---|---|
| | Protruding Portion | | | |
| | Outer Circumferential Height mm | Inner Circumferential Height | Outer Circumferential Diameter mm | Inner Circumferential Diameter mm |
| Example 1 | 4 | 1 | 16 | 8 |
| Example 2 | 5 | 1 | 16 | 10 |
| Example 3 | 7 | 1 | 22 | 10 |
| Example 4 | 7 | 2 | 20 | 10 |
| Example 5 | 8 | 2 | 24 | 8 |
| Example 6 | 9 | 2 | 26 | 10 |
| Example 7 | 9 | 3 | 30 | 10 |
| Example 8 | 10 | 3 | 32 | 12 |
| Example 9 | 3 | 1 | 16 | 8 |
| Example 10 | 5 | 1 | 16 | 10 |
| Comparative Example 1 | - | - | - | - |
| Comparative Example 2 | Absence | Absence | Absence | Absence |
| Comparative Example 3 | 12 | 5 | 16 | 8 |
| Comparative Example 4 | - | - | - | - |

Comparative Example 1 and Comparative Example 4 were made into rectangular containers each having a width of 523 mm and a length of 415 mm. For this reason, the containers of Comparative Example 1 were not provided with a storage portion.

Comparative Example 2 was the same as Example 1 except that no protruding portion was provided. In Comparative Example 3, the outer circumferential height/ball diameter was 0.5.

Regarding each of the storage trays according to the examples and comparative examples, Table 2 shows the outer circumferential height of the protruding portion/ball diameter, the inner circumferential height of the protruding portion/ball diameter, the outer circumferential diameter of the protruding portion/ball diameter, the inner circumferential diameter of the protruding portion/ball diameter, the height of the storage portion/ball diameter, and the number of storage portions in one storage tray.

[Table 2]

| | Outer Circumferential Height of Protruding Portion /Ball Diameter | Inner Circumferential Height of Protruding Portion /Ball Diameter | Outer Circumferential Diameter of Protruding Portion /Ball Diameter |
|---|---|---|---|
| Example 1 | 0.17 | 0.04 | 0.67 |

(continued)

| | Outer Circumferential Height of Protruding Portion /Ball Diameter | Inner Circumferential Height of Protruding Portion /Ball Diameter | Outer Circumferential Diameter of Protruding Portion /Ball Diameter |
|---|---|---|---|
| Example 2 | 0.15 | 0.03 | 0.48 |
| Example 3 | 0.20 | 0.03 | 0.63 |
| Example 4 | 0.16 | 0.05 | 0.47 |
| Example 5 | 0.18 | 0.05 | 0.54 |
| Example 6 | 0.18 | 0.04 | 0.53 |
| Example 7 | 0.18 | 0.06 | 0.60 |
| Example 8 | 0.17 | 0.05 | 0.54 |
| Example 9 | 0.13 | 0.04 | 0.67 |
| Example 10 | 0.15 | 0.03 | 0.48 |
| Comparative Example 1 | - | - | - |
| Comparative Example 2 | 0 | 0 | 0 |
| Comparative Example 3 | 0.50 | 0.21 | 0.67 |
| Comparative Example 4 | - | - | - |

| | Inner Circumferential Diameter of Protruding Portion /Ball Diameter | Height of Storage Portion /Ball Diameter | The Number of Storage Portions |
|---|---|---|---|
| Example 1 | 0.33 | 1.50 | 15 |
| Example 2 | 0.30 | 1.09 | 20 |
| Example 3 | 0.29 | 1.41 | 30 |
| Example 4 | 0.23 | 1.15 | 15 |
| Example 5 | 0.18 | 1.24 | 15 |
| Example 6 | 0.20 | 1.11 | 15 |
| Example 7 | 0.20 | 1.32 | 12 |
| Example 8 | 0.20 | 1.12 | 10 |
| Example 9 | 0.33 | 1.5 | 15 |
| Example 10 | 0.30 | 1.09 | 20 |
| Comparative Example 1 | - | - | 1 |
| Comparative Example 2 | 0 | 1.50 | 15 |
| Comparative Example 3 | 0.33 | 1.50 | 15 |
| Comparative Example 4 | - | - | 1 |

Ceramic balls were stored in all the storage portions of the storage trays according to the examples and comparative examples. In Comparative Examples 1 and 4, 20 ceramic balls were stored in one storage portion.

The vibration test and the drop test were conducted for each storage tray according to the examples and comparative examples. Each test was conducted for three storage trays, each storing ceramic balls, stacked in the up-down direction. Each set of the three stacked storage trays packed in cardboard and secured with cable ties was used as a sample. The cable ties secured the sample at two locations in the longitudinal direction and at two locations in the transverse direction.

Each vibration test was conducted in accordance with JIS-Z-0200 (2013) random vibration test level 1. The vibration frequency was 6 Hz, the vibration direction was vertical direction, and the vibration test was carried out for 180

minutes.

Each drop test was conducted in accordance with JIS-Z-0200 (2013) level 1. The height for drop was 60 cm. The dropping order was 2-3-5 corner, 3-5 edge, 2-3 edge, 2-5 edge, 2-3-6 corner, 3-6 edge, 2-6 edge, face 5, face 6, face 2, face 3, and face 1.

The ceramic balls were examined for damage after each of the vibration tests and the drop tests. The tests were each conducted with prepared ten samples.

The percentage of ceramic balls that were damaged in each of the vibration tests and drop tests was investigated as a damage rate (%). The damage rate (%) is calculated from the following formula.

Damage rate (%) = (number of damaged balls/number of balls stored in the storage portion) $\times$ 100

The results are shown in Table 3.

[Table 3]

| | Damage Rate % in Vibration Test | Damage Rate % In Drop Test |
|---|---|---|
| Example 1 | 0 | 0 |
| Example 2 | 0 | 0 |
| Example 3 | 0 | 0 |
| Example 4 | 0 | 0 |
| Example 5 | 0 | 0 |
| Example 6 | 0 | 0 |
| Example 7 | 0 | 0 |
| Example 8 | 0 | 0 |
| Example 9 | 0 | 0 |
| Example 10 | 0 | 0 |
| Comparative Example 1 | 18 | 27 |
| Comparative Example 2 | 5 | 8 |
| Comparative Example 3 | 9 | 11 |
| Comparative Example 4 | 29 | 35 |

As can be seen from Table 3, when the storage trays 1 according to Examples 1 to 10 were used, no damage to the ceramic balls was confirmed. Even the ceramic balls of aluminum oxide sintered bodies with low strength, like the storage trays 1 of Examples 9 and 10, had no damage.

The square boxes with no storage portion as in Comparative Examples 1 and 4 each had high damage rates. In particular, the ceramic balls made of the aluminum oxide sintered bodies with low strength shown in Comparative Example 4 had remarkably high damage rates. Furthermore, the samples in which each storage portion had no protruding portion, as in Comparative Example 2, did not fully press down the balls with the protruding portions when the trays were stacked in the up-down direction, resulting in high damage rates. Contrarily, the samples having the too high protruding portions, as in Comparative Example 3, each had a large stress on the balls stored in the lower trays when the trays were stacked in the up-down direction, resulting in high damage rates.

According to at least one embodiment described above, it is possible to reduce damage such as cracks and chips of the ceramic balls stored in the ceramic ball storage trays.

## Claims

**1.** A ceramic ball storage tray (1) comprising a storage portion (2) that stores a ceramic ball (3) with a diameter (13) of 10 mm or more and 100 mm or less, wherein

the storage portion (2) has a protruding portion (4) formed such that a center of a bottom surface portion (11) of the storage portion (2) is hollow, and

a ratio of a height of an outer circumferential surface (41) of the protruding portion (4) relative to a diameter (13) of the ceramic ball (3) is within a range of 0.05 or more and 0.30 or less,and
a ratio of a height of the storage portion (2) relative to the diameter (13) of the ceramic ball (3) is within a range of 1.05 or more and 2.00 or less.

**2.** The ceramic ball storage tray (1) according to claim 1, wherein a ratio of a height of an inner circumferential surface (42) of the protruding portion (4) relative to the diameter (13) of the ceramic ball (3) is within a range of 0.01 or more and 0.10 or less.

**3.** The ceramic ball storage tray (1) according to any one of claims 1 or 2, wherein a ratio of a diameter (13) of the outer circumferential surface (41) of the protruding portion (4) relative to the diameter (13) of the ceramic ball (3) is within a range of 0.3 or more and 0.8 or less.

**4.** The ceramic ball storage tray (1) according to any one of claims 1 to 3, wherein a ratio of a diameter (13) of an inner circumferential surface (42) of the protruding portion (4) relative to the diameter (13) of the ceramic ball (3) is within a range of 0.1 or more and 0.6 or less.

**5.** The ceramic ball storage tray (1) according to any one of claims 1 to 4, wherein a height of the outer circumferential surface (41) of the protruding portion (4) is 3 mm or more.

**6.** The ceramic ball storage tray (1) according to any one of claims 1 to 2. 5, wherein the ceramic ball storage tray (1) is made of plastic.

**7.** The ceramic ball storage tray (1) according to any one of claims 1 to 6, wherein the protruding portion (4) has a hollow cylindrical shape formed such that the center of the bottom surface portion (11) is hollow.

**8.** A method of storing ceramic balls (3), comprising:

using a plurality of ceramic ball storage trays (1) according to any one of claims 1 to 7; and
stacking the plurality of ceramic ball storage trays (1) in an up-down direction, the ceramic ball storage trays (1) each storing the ceramic ball (3).

**9.** The method of storing ceramic balls (3) according to claim 8, wherein, when the plurality of ceramic ball storage trays (1) are stacked in the up-down direction, ceramic balls (3) adjacent in the up-down direction do not come into contact with each other.

**10.** The method of storing ceramic balls (3) according to claim 8, wherein, when the plurality of ceramic ball storage trays (1) are stacked in the up-down direction, ceramic balls (3) adjacent in the up-down direction are in contact with each other via the protruding portion (4).

**11.** The method of storing ceramic balls (3) according to any one of claims 8 to 10, further comprising:

storing the ceramic ball (3) with a band-shaped portion at each of the plurality of ceramic ball storage trays (1); and
stacking the plurality of ceramic ball storage trays (1) in the up-down direction.

**12.** The method of storing ceramic balls (3) according to any one of claims 8 to 11, further comprising:

storing the ceramic ball (3) made of a silicon nitride sintered body at each of the plurality of ceramic ball storage trays (1); and
stacking the plurality of ceramic ball storage trays (1) in the up-down direction.

**13.** The method of storing ceramic balls (3) according to any one of claims 8 to 12, further comprising transporting the plurality of ceramic ball storage trays (1) at each of which the ceramic ball (3) is stored in a state in which the ceramic ball storage trays (1) are stacked in the up-down direction.

## Patentansprüche

**1.** Eine Keramikkugel-Lagerschale (1), umfassend einen Aufnahmeabschnitt (2), der eine Keramikkugel (3) mit einem Durchmesser (13) von 10 mm oder mehr und 100 mm oder weniger aufnimmt, wobei

der Aufnahmeabschnitt (2) einen vorspringenden Abschnitt (4) aufweist, der derart ausgebildet ist, dass eine Mitte eines Bodenflächenabschnitts (11) des Aufnahmeabschnitts (2) hohl ist, und
ein Verhältnis einer Höhe einer äußeren Umfangsfläche (41) des vorspringenden Abschnitts (4) relativ zu einem Durchmesser (13) der Keramikkugel (3) innerhalb eines Bereichs von 0,05 oder mehr und 0,30 oder weniger liegt, und
ein Verhältnis einer Höhe des Aufnahmeabschnitts (2) relativ zu dem Durchmesser (13) der Keramikkugel (3) innerhalb eines Bereichs von 1,05 oder mehr und 2,00 oder weniger liegt.

**2.** Die Keramikkugel-Lagerschale (1) nach Anspruch 1, wobei ein Verhältnis einer Höhe einer inneren Umfangsfläche (42) des vorspringenden Abschnitts (4) relativ zu dem Durchmesser (13) der Keramikkugel (3) innerhalb eines Bereichs von 0,01 oder mehr und 0,10 oder weniger liegt.

**3.** Die Keramikkugel-Lagerschale (1) nach einem der Ansprüche 1 oder 2, wobei ein Verhältnis eines Durchmessers (13) der äußeren Umfangsfläche (41) des vorspringenden Abschnitts (4) relativ zu dem Durchmesser (13) der Keramikkugel (3) innerhalb eines Bereichs von 0,3 oder mehr und 0,8 oder weniger liegt.

**4.** Die Keramikkugel-Lagerschale (1) nach einem der Ansprüche 1 bis 3, wobei ein Verhältnis eines Durchmessers (13) einer inneren Umfangsfläche (42) des vorspringenden Abschnitts (4) relativ zu dem Durchmesser (13) der Keramikkugel (3) innerhalb eines Bereichs von 0,1 oder mehr und 0,6 oder weniger liegt.

**5.** Die Keramikkugel-Lagerschale (1) nach einem der Ansprüche 1 bis 4, wobei eine Höhe der äußeren Umfangsfläche (41) des vorspringenden Abschnitts (4) 3 mm oder mehr beträgt.

**6.** Die Keramikkugel-Lagerschale (1) nach einem der Ansprüche 1 bis 5, wobei die Keramikkugel-Lagerschale (1) aus Kunststoff hergestellt ist.

**7.** Die Keramikkugel-Lagerschale (1) nach einem der Ansprüche 1 bis 6, wobei der vorspringende Abschnitt (4) eine hohle zylindrische Form aufweist, die derart ausgebildet ist, dass die Mitte des Bodenflächenabschnitts (11) hohl ist.

**8.** Ein Verfahren zum Lagern von Keramikkugeln (3), umfassend:

Verwenden einer Mehrzahl von Keramikkugel-Lagerschalen (1) nach einem der Ansprüche 1 bis 7; und
Stapeln der Mehrzahl von Keramikkugel-Lagerschalen (1) in einer Auf-Ab-Richtung, wobei die Keramikkugel-Lagerschalen (1) jeweils die Keramikkugel (3) lagern.

**9.** Das Verfahren zum Lagern von Keramikkugeln (3) nach Anspruch 8, wobei, wenn die Mehrzahl von Keramikkugel-Lagerschalen (1) in der Auf-Ab-Richtung gestapelt ist, in der Auf-Ab-Richtung benachbarte Keramikkugeln (3) nicht miteinander in Kontakt kommen.

**10.** Das Verfahren zum Lagern von Keramikkugeln (3) nach Anspruch 8, wobei, wenn die Mehrzahl von Keramikkugel-Lagerschalen (1) in der Auf-Ab-Richtung gestapelt ist, in der Auf-Ab-Richtung benachbarte Keramikkugeln (3) über den vorspringenden Abschnitt (4) miteinander in Kontakt stehen.

**11.** Das Verfahren zum Lagern von Keramikkugeln (3) nach einem der Ansprüche 8 bis 10, ferner umfassend:

Lagern der Keramikkugel (3) mit einem bandförmigen Abschnitt in jeder der Mehrzahl von Keramikkugel-Lagerschalen (1); und
Stapeln der Mehrzahl von Keramikkugel-Lagerschalen (1) in der Auf-Ab-Richtung.

**12.** Das Verfahren zum Lagern von Keramikkugeln (3) nach einem der Ansprüche 8 bis 11, ferner umfassend:

Lagern der Keramikkugel (3), die aus einem Siliziumnitrid-Sinterkörper hergestellt ist, in jeder der Mehrzahl von Keramikkugel-Lagerschalen (1); und

Stapeln der Mehrzahl von Keramikkugel-Lagerschalen (1) in der Auf-Ab-Richtung.

**13.** Das Verfahren zum Lagern von Keramikkugeln (3) nach einem der Ansprüche 8 bis 12, ferner umfassend ein Transportieren der Mehrzahl von Keramikkugel-Lagerschalen (1), in denen jeweils die Keramikkugel (3) gelagert ist, in einem Zustand, in dem die Keramikkugel-Lagerschalen (1) in der Auf-Ab-Richtung gelagert sind.

## Revendications

**1.** Un plateau de stockage de billes de céramique (1) comprenant une partie de stockage (2) qui stocke une bille de céramique (3) ayant un diamètre (13) de 10 mm ou plus et 100 mm ou moins, dans lequel la partie de stockage (2) présente une partie saillante (4) formée de telle sorte qu'un centre d'une partie de surface de fond (11) de la partie de stockage (2) soit creux, et un rapport d'une hauteur d'une surface circonférentielle externe (41) de la partie saillante (4) par rapport à un diamètre (13) de la bille de céramique (3) est situé dans une plage de 0,05 ou plus et 0,30 ou moins, et un rapport d'une hauteur de la partie de stockage (2) par rapport au diamètre (13) de la bille de céramique (3) est situé dans une plage de 1,05 ou plus et 2,00 ou moins.

**2.** Le plateau de stockage de billes de céramique (1) selon la revendication 1, dans lequel un rapport d'une hauteur d'une surface circonférentielle interne (42) de la partie saillante (4) par rapport au diamètre (13) de la bille de céramique (3) est situé dans une plage de 0,01 ou plus et 0,10 ou moins.

**3.** Le plateau de stockage de billes de céramique (1) selon l'une quelconque des revendications 1 ou 2, dans lequel un rapport d'un diamètre (13) de la surface circonférentielle externe (41) de la partie saillante (4) par rapport au diamètre (13) de la bille de céramique (3) est situé dans une plage de 0,3 ou plus et 0,8 ou moins.

**4.** Le plateau de stockage de billes de céramique (1) selon l'une quelconque des revendications 1 à 3, dans lequel un rapport d'un diamètre (13) d'une surface circonférentielle interne (42) de la partie saillante (4) par rapport au diamètre (13) de la bille de céramique (3) est situé dans une plage de 0,1 ou plus et 0,6 ou moins.

**5.** Le plateau de stockage de billes de céramique (1) selon l'une quelconque des revendications 1 à 4, dans lequel une hauteur de la surface circonférentielle externe (41) de la partie saillante (4) est de 3 mm ou plus.

**6.** Le plateau de stockage de billes de céramique (1) selon l'une quelconque des revendications 1 à 5, dans lequel le plateau de stockage de billes de céramique (1) est réalisé en matière plastique.

**7.** Le plateau de stockage de billes de céramique (1) selon l'une quelconque des revendications 1 à 6, dans lequel la partie saillante (4) présente une forme cylindrique creuse formée de telle sorte que le centre de la partie de surface de fond (11) soit creux.

**8.** Un procédé de stockage de billes de céramique (3), comprenant :

l'utilisation d'une pluralité de plateaux de stockage de billes de céramique (1) selon l'une quelconque des revendications 1 à 7 ; et
l'empilement de la pluralité de plateaux de stockage de billes de céramique (1) dans une direction haut-bas, les plateaux de stockage de billes de céramique (1) stockant chacun la bille de céramique (3).

**9.** Le procédé de stockage de billes de céramique (3) selon la revendication 8, dans lequel, lorsque la pluralité de plateaux de stockage de billes de céramique (1) sont empilés dans la direction haut-bas, des billes de céramique (3) adjacentes dans la direction haut-bas n'entrent pas en contact les unes avec les autres.

**10.** Le procédé de stockage de billes de céramique (3) selon la revendication 8, dans lequel, lorsque la pluralité de plateaux de stockage de billes de céramique (1) sont empilés dans la direction haut-bas, des billes de céramique (3) adjacentes dans la direction haut-bas sont en contact les unes avec les autres via la partie saillante (4).

**11.** Le procédé de stockage de billes de céramique (3) selon l'une quelconque des revendications 8 à 10, comprenant en outre :

le stockage de la bille de céramique (3) présentant une partie en forme de bande au niveau de chacun de la

pluralité de plateaux de stockage de billes de céramique (1) ; et
l'empilement de la pluralité de plateaux de stockage de billes de céramique (1) dans la direction haut-bas.

**12.** Le procédé de stockage de billes de céramique (3) selon l'une quelconque des revendications 8 à 11, comprenant en outre :

le stockage de la bille de céramique (3) réalisée en un corps fritté de nitrure de silicium au niveau de chacun de la pluralité de plateaux de stockage de billes de céramique (1) ; et
l'empilement de la pluralité de plateaux de stockage de billes de céramique (1) dans la direction haut-bas.

**13.** Le procédé de stockage de billes de céramique (3) selon l'une quelconque des revendications 8 à 12, comprenant en outre le transport de la pluralité de plateaux de stockage de billes de céramique (1) au niveau de chacun desquels la bille de céramique (3) est stockée dans un état dans lequel les plateaux de stockage de billes de céramique (1) sont empilés dans la direction haut-bas.

1
3
4
2
D
11
12
14
12
14
B
B
C
C

FIG. 1

1

(A)

1
12
12
2
3

(B)

1
12
2
3

(C)

FIG. 2

13
-14-
-14-
3
12
12
8
5
6
41
42
10
9
4
11

FIG. 3

-14-
-14-
3
12
12
4
-14-
-14-
3
12
12
4

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5487099 A
- JP 2004018050 A
- US 2007138177 A1
- CN 201884486 U
- DE 7033763 U
- WO 2017157375 A1
- JP 4761613 A